# EUROPEAN PATENT SPECIFICATION

(11) **EP 4 246 353 B1**
(45) Date of publication and mention of the grant of the patent: **18.12.2024**
(21) Application number: 22161883.8
(22) Date of filing: 14.03.2022
(51) Int. Cl.: G06F 21/57, G06F 21/71, G06F 21/81

(54) **METHOD TO PREVENT REPLAY ATTACK**
VERFAHREN ZUR VERHINDERUNG EINES REPLAY-ANGRIFFS
PROCÉDÉ POUR EMPÊCHER UNE ATTAQUE PAR RÉEXÉCUTION

(43) Date of publication of application: 20.09.2023
(73) Proprietor: Nagravision Sarl, 1033 Cheseaux-sur-Lausanne (CH)
(72) Inventor: VIllegas, Karine, 1033 Cheseaux-sur Lausanne (CH); Gremaud, Fabien, 1033 Cheseaux-sur-Lausanne (CH); Ryan, Conor, 1033 Cheseaux-Sur-Lausanne (CH)
(74) Representative: Novagraaf International SA

(56) References cited:
- EP-A1- 3 667 533
- EP-A1- 3 913 517
- US-A1- 2016 026 783
- ARM: "Arm Platform Security Architecture Trusted Boot and Firmware Update 1.1 Contents", 9 March 2020 (2020-03-09), XP055891415, Retrieved from the Internet <URL:https://developer.arm.com/-/media/Arm%20Developer%20Community/PDF/PSA/DEN0072-PSA_TBFU_1.1-BETA0.pdf?revision=3ce2513a-ae0f-4b43-96a0-851ed67a640b&hash=5A93EC495294641ADD8880DA88619EC76D174383> [retrieved on 20220214]

## Description

### TECHNICAL FIELD

The present disclosure relates to a method performed by a system comprising a secure processing sub-system having an internal non-volatile memory, and a non-volatile memory that is external to the secure processing sub-system. The external non-volatile memory can be used by the secure processing sub-system to store data. Such a system can be used for example in a smartphone, a communication device, a GPS receiver, an autonomous robot, an device, etc...

### BACKGROUND

The secure processing sub-system, or secure processing element, or secure element, is a secure area that is for example part of an integrated circuit. It may include a separate processor or CPU (central processing unit), one or more memories, hardware means and/or software means to implement cryptographic functions such as encryption and/or decryption algorithm(s), signature and/or verification algorithm(s), an interface with the integrated circuit to send and receive data and/or commands to and from the integrated circuit, buses to connect the external memory via the integrated circuit. A power source and a clock generator provide power and a clock signal to the integrated circuit.

The secure processing sub-system may be implemented on an integrated circuit such as a system-on-chip (SoC), a chip or other similar device having a processor or CPU and one or more memories.

The amount of memory available in the secure processing sub-system may be limited. In some cases, the amount of the memory available in the integrated circuit is also limited due to the small size of the integrated circuit. As a result, the secure processing sub-system may use a non-volatile memory (NVM) that is external to the secure processing sub-system, and/or external to the integrated circuit, to store data. The confidentiality and the authenticity of the data stored in the external non-volatile memory may be ensured by the use of encryption, integrity and authentication mechanisms.

The data stored in the external non-volatile memory may undergo updates while the system is powered on. These updates may be followed up, for example in a volatile memory.

The power supply to the system may be temporarily interrupted, due to a power loss from the power source. Such a situation may occur when a battery used as the power source is being discharged or is removed.

An attacker may try to replace the current version of the data stored in the external non-volatile memory by an old copy of the data that is validly encrypted and authenticated, for example signed, by the secure processing sub-system, for example during a power interruption. Such an attack is referenced as a rollback or playback attack. It may allow the attacker to gain access to the secure processing sub-system and/or have the secure processing sub-system to perform an unauthorized action.

US2017/0329994 discloses a computing device comprising:
- a secure processing subsystem implemented on a SoC and including an internal non-volatile memory, such as an OTP memory;
- an external non-volatile memory that is external to the SoC and used by the secure processing sub-system to store data; and
- a power source, external to secure processing subsystem, to supply the secure processing subsystem.

The secure processing subsystem has a volatile memory and a non-volatile memory, such as an OTP (one-time programmable) memory.

The volatile memory is used by the secure processing subsystem to store and maintain the data while power is supplied to the secure processing subsystem. In the event that power supply is lost or interrupted, the content of the volatile memory is lost. The secure processing sub-system maintains and updates data in the volatile memory but needs to offload the data to the external memory, that may be required later or for persistent storage, in the event of a power loss from the external power source.

For that purpose, the secure processing subsystem has an internal power source that is used as a secondary power source for providing power in the event that power from the external power source is lost. It can comprise a capacitor, a battery, or other device that can store electrical power and power the secure processing sub-system at least for a short period of time in the event of a power loss from the external power source.

Furthermore, an anti-replay counter ARC is used to prevent replay attacks on data stored in the external memory by the secure processing sub-system. The ARC value is maintained in the volatile memory of the secure processing sub-system while power is provided from the external power source. But, in an event indicative that power provided from the external power source has been lost or power loss is imminent, the ARC value is written from the volatile memory of the secure processing sub-system to the non-volatile memory of the secure processing sub-system. The internal power source provides the secure processing sub-system with sufficient power to allow it to write the current ARC value stored in the volatile memory into the internal non-volatile memory.

In US2017/0329994, the secure processing sub-system of the computing device uses the ARC value to prevent attacks in which an attacker attempts to place data expired but otherwise valid in the external memory in an attempt to gain access to the secure processing sub-system and have the secure processing sub-system to perform some unauthorized action. To avoid replay attacks, the SoC relies on the ARC. When the computing device is powered on, the processor of the secure processing sub-system retrieves the ARC value from its internal non-volatile memory and stores the ARC value in its volatile memory. The ARC value is maintained in the volatile memory and updated each time data is written to the external memory, until a triggering event occurs that causes the processor of the secure processing sub-system to update the ARC value in the internal non-volatile memory with the current ARC value stored in the volatile memory. The ARC value in the volatile memory of the secure processing sub-system follows the updates of the data stored in the external memory. The triggering event indicates that the power from the external power source has been lost or may be lost. When the computing device is powered on again, the authenticity of the data stored in the external memory is checked by the secure processing sub-system using the ARC value stored in its internal non-volatile memory.

The approach disclosed in US2017/0329994 requires a secure detection of the triggering event and an internal power source with high security requirements. The technical implementation needs to be robust since all the power off events must be detected and the internal power source should be protected against any malicious attack. Furthermore, the addition of an internal power source in a secure processing sub-system is expensive and requires more space on the integrated circuit. Documents EP 3 667 533 A1 and US 2016/026783 A1 disclose replay protection systems using power loss detection units.

Therefore, there is a need for improving the situation. More precisely, there is a need to avoid a rollback or playback attack in a system including:
- a secure processing sub-system having an internal non-volatile memory,
- a non-volatile memory that is external to the secure processing sub-system; with a technical solution having a simpler and less expensive implementation, and requiring less space.

### SUMMARY

The present disclosure concerns a method performed by a system including
i) a secure processing sub-system having an internal non-volatile memory,
ii) a non-volatile memory that is external to the secure processing sub-system; the method being characterized in that
during each power cycle where data stored in the external non-volatile memory is updated, the secure processing sub-system executes a transaction by performing the following steps :
. writing a first transaction data marking the start of the transaction in the internal non-volatile memory upon a first update of the data within the power cycle, and
. at the end of the power cycle, writing a second transaction data marking the end of said transaction to the internal non-volatile memory,
and, at the beginning of any power cycle, the secure processing sub-system performs the steps of
. checking if a transaction is still pending in the internal non-volatile memory based on the transaction data written in the internal non-volatile memory; and
. if a transaction is still pending, preventing to use the data stored in the external non-volatile memory.

A power cycle corresponds to a period while power is supplied from the power source to the system elements from the time the system is powered on and until the system is powered off.

In each power cycle where data stored in the external non-volatile memory is updated, a transaction is started in the internal non-volatile memory. In the event of an imminent power interruption or power loss, a signal may be transmitted to the secure processing sub-system indicating that the power supply is going to be interrupted. Shortly before the power interruption, the secure processing sub-system ends or commits the transaction in the internal non-volatile memory.

In case that the device is attacked, it is very likely that a signal indicating that power is going to be interrupted is not sent to the secure processing sub-system. As a result, the secure processing sub-system does not end properly the current transaction in the internal non-volatile memory. At the time that the device is next powered on, the secure processing system checks the transaction status in its internal non-volatile memory and, if a transaction is still pending, the secure processing sub-system cannot trust the data stored in the external non-volatile memory and consequently prevents to use them. The present transaction-based mechanism allows to prevent a rollback and replay attack consisting in using an old version of the data stored in the external memory, which may be validly encrypted and/or authenticated.

In the present disclosure, it is assumed that, in normal circumstances, there is no attack and the transaction can be properly closed shortly before the power interruption. But, when there is an attack, the attack can be detected later based on the transaction status that remains pending. For example, during an attack, the battery may suddenly be removed, and the secure processing sub-system does not have time to end the transaction in the internal non-volatile memory. As a result, the transaction remains pending in the internal non-volatile memory. At the time that the system is powered on again, it is detected that a transaction is still pending. Consequently, the content of the external non-volatile memory is no longer trusted and used by the secure processing sub-system. The secure processing sub-system may still use internal functions and continue to operate.

In an embodiment, at the end of each power cycle where the data stored in the external non-volatile memory is updated, the secure processing sub-system writes into the internal non-volatile memory a version information of the updated data stored in the external non-volatile memory before ending the transaction.

In that case, at the beginning of any power cycle, after verifying that there is no pending transaction in the internal non-volatile memory, the secure processing sub-system verifies that the version of the data stored in the external non-volatile memory matches the version information in the internal non-volatile memory and, in a negative event, prevents to use the data stored in the external non-volatile memory.

If there is no pending transaction when the system is powered on, the secure processing sub-system performs another security check on the data stored in the external non-volatile memory by verifying if the version of the data stored in the external non-volatile memory corresponds to the data version information stored in the internal non-volatile memory. This allows to guarantee that the version of the data stored in the external memory is not an old version.

In an embodiment, at the end of the power cycle where the data stored in the external non-volatile memory is updated, the secure processing sub-system increments a version counter in the internal non-volatile memory and writes the version counter value into the external non-volatile memory. The use of a version counter in the internal non-volatile memory to follow the versions of the data stored in the external non-volatile memory allows to minimize the wear of the internal non-volatile memory.

In another embodiment, at the end of the power cycle where the data stored in the external non-volatile memory is updated, the secure processing sub-system computes a condensed representation of the updated data stored in the external non-volatile memory and writes said condensed representation into the internal non-volatile memory and into the external non-volatile memory.

In a first embodiment, the secure processing sub-system controls to
. copy the data from the external non-volatile memory in a volatile memory, at the beginning of a power cycle,
. update the data in the volatile memory during the power cycle, and
. at the end of the power cycle, write the updated data to persist in memory from said volatile memory to the external non-volatile memory before ending the transaction. The use of a volatile memory to maintain and update the data during the power cycles allows to save programming time and to spare the external non-volatile memory.

In a second embodiment, in each power cycle where the data stored in the external non-volatile memory is updated, the secure processing sub-system controls to
. update the data in the external non-volatile memory during the power cycle;
. at every update, write a data version information into a volatile memory and in the external non-volatile memory, and
. at the end of the power cycle, write the current data version information from the volatile memory to the internal non-volatile memory before ending the transaction. The present transaction-based mechanism also applies in case the data is updated in the external non-volatile memory.

The external non-volatile memory may have a first area and a second area, and, at the beginning of any power cycle, if a transaction is still pending, the secure processing sub-system may only prevent to use the data stored in the first area of the external non-volatile memory.

The secure processing sub-system can start and end a transaction in its internal non-volatile memory in different ways.

In a first example of implementation, the secure processing sub-system:
. increments a value of a first counter in the internal non-volatile memory to write the first transaction data;
. increments a value of a second counter in the internal non-volatile memory to write the second transaction data,
and, at the beginning of any power cycle:
. compares the respective values of the first and second counters to check if a transaction executed during a previous power cycle is still pending.

In a second example of implementation, the secure processing sub-system:
- increments a value of a counter in the internal non-volatile memory to write the first transaction data;
- increments a value of the same counter in the internal non-volatile memory to write the second transaction data;
   and, at the beginning of any power cycle,
- verifies the even or odd character of said counter value to check if a transaction executed during a previous power cycle is still pending.

In a third example of implementation, the secure processing sub-system:
. extracts a transaction start value from a value table, pre-stored in the secure processing sub-system, containing preselected transaction start values associated with pre-selected transaction end values and write the extracted start value to the internal non-volatile memory to write the first transaction data;
. extracts the transaction end value associated with the extracted transaction start value from the value table and write the extracted transaction end value to the internal non-volatile memory to write the second transaction data;
and, at the beginning of any power cycle:
. verifies that the transaction start value and the associated transaction end value are both written in the internal non-volatile memory to check if a transaction executed during a previous power cycle is still pending.

The above examples are non-limitative.

The present disclosure also concerns a system including
i) a secure processing sub-system having an internal non-volatile memory, and
ii) a non-volatile memory that is external to the secure processing sub-system; wherein the system has means to carry out the steps of the method previously defined.

The present disclosure further concerns a computer program comprising instructions which, when the program is executed by a computer, cause the computer to carry out the steps of the method previously defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a functional block diagram of a system a secure processing sub-system, according to an embodiment.
Figure 2A-2B is a flow diagram of process updating data, according to an embodiment.
Figure 3 is a flow diagram of a process of starting a power cycle, according to an embodiment.

### DETAILED DESCRIPTION

The present disclosure provides a transaction-based anti-replay or anti-rollback mechanism for a system including
i) a secure processing sub-system having an internal non-volatile memory (NVM), and
ii) a non-volatile memory (NVM), or persistent memory, that is external to the secure processing sub-system.

The secure processing sub-system may be implemented on an integrated circuit. It may be a secure area of the integrated circuit. Optionally, the non-volatile memory may be external to the integrated circuit.

Power supply to the system is provided by a power source. The power source may be external to the assembly, or system, comprising the secure processing sub-system and the external non-volatile memory. This assembly or system is supplied by the power source during power cycles between which power is interrupted. Any power cycle is started when the system (assembly) is powered on and ended when the system (assembly) is powered down or off. Each power cycle corresponds to a period while power is supplied from the power source to the system elements from the time the system is powered on and until the system is powered off.

The secure processing sub-system, that may be implemented on an integrated circuit, uses the external NVM to store data. The data stored in the external NVM may be updated over time during the power cycles. The anti-replay mechanism can be used to prevent rollback or replay attacks on the data stored in the external NVM. Indeed, an attacker may attempt to restore an old version of the data to the external NVM which is validly authenticated (for example validly signed), and/or encrypted by the secure processing sub-system in a rollback or replay attack. The present disclosure concerns an additional protection for the data stored in the external NVM. Accordingly, during each power cycle where the data is updated, a transaction processing is started upon a first update of the data within this power cycle, by writing a first transaction data in the internal NVM. At the end of this power cycle, for example upon reception of a signal indicating that a power interruption is imminent, in case updated data must be kept in the external NVM, one or more required writing actions are performed to update the internal NVM and, if needed, the external NVM in accordance with the current version of the updated data. Then, the transaction processing is committed, in other words validated or closed, by writing a second transaction data in the internal non-volatile memory. After the power interruption, when the system is next powered on, the secure processing sub-system checks if a transaction processing is still pending, in other words not committed or not closed, in the internal NVM. If no transaction processing is pending in the internal NVM, the version of the data (in other words the freshness of the data) that is stored in the external non-volatile memory can be trusted and used by the secure processing sub-system. In that case, the data stored in the external non-volatile memory can be further verified by checking the integrity, authenticity and/or confidentiality of the data by means of well-known verification algorithms. If a transaction processing is still pending in the internal NVM, which means that the last transaction did not end correctly, the version of the data stored in the external NVM cannot be trusted and used by the secure processing sub-system. In such a case, it is assumed that an attack may have been attempted and, for security reasons, the data stored in the external NVM is not trusted and consequently not used to prevent any rollback or playback attack.

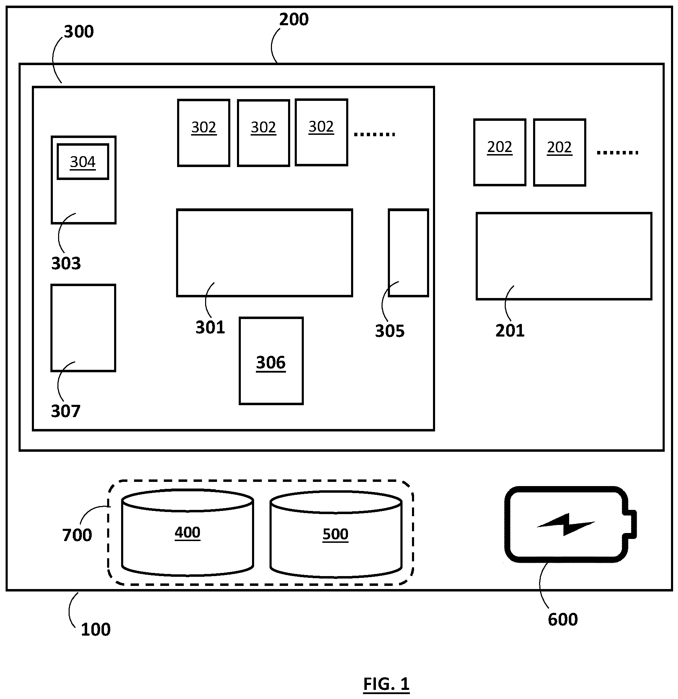

Figure 1 shows a functional block diagram of a computing system 100, or computing device, including an integrated circuit 200, a secure processing sub-system 300 implemented on the integrated circuit 200, an external non-volatile memory (NVM) 400, and a power source 600.

The power source 600 powers the system 100, and may be external to the integrated circuit 200. It may comprise a battery or any other equipment for providing electrical power to the components of the integrated circuit 200.

The secure processing sub-system 300 may provide a secure execution environment, with a high level of security, including hardware and/or software means for implementing functions such as cryptographic functions and/or algorithms for example for encryption, decryption and/or authentication. The secure processing sub-system 300 may comprise a processor or CPU 301, and one or more cryptographic accelerators 302, or co-processors, designed to perform cryptographic operations.

Furthermore, the secure processing sub-system 300 may have a software, or program instructions, component or module 306 to control the execution of a transaction processing, during each power cycle where data is updated, and of a process of verifying if a transaction is still pending in the internal NVM 303 and, in a positive event, preventing to use the data stored in the external NVM 400, as described later in the description of the method. The software 306 may run on the CPU 301 of the secure processing sub-system 300.

The secure processing sub-system 300 may comprise a non-volatile memory 303, such as an OTP (One Time Programmable) memory. The non-volatile memory 303 is a persistent memory that maintains the data stored therein even in case of power interruption to the secure processing sub-system 300. The non-volatile memory 303 of the secure processing sub-system 300 is not limited to an OTP memory. It could be any other type of non-volatile memory, such as a MTP (multi-time programmable) memory or a flash memory.

In addition, optionally, the secure processing sub-system 300 may include a volatile memory 307 that may be used as a working memory.

The secure processing sub-system 300 can also have an integrated circuit interface 305 to communicate with the integrated circuit 200 in order to send and receive data and/or commands. Buses (not represented) can also be provided in the secure processing sub-system 300.

The integrated circuit 200 may be a system-on-chip (SOC), also referenced as a chip. As shown in figure 1, it may include a processor or CPU 201, hardware and/or software elements to implement one or more functions and/or applications represented by functional blocks 202 in figure 1. The functions and/or applications implemented on the integrated circuit 200 may depend on the functionality of the sub-system 300 or system 100.

The non-volatile memory (NVM) 400 is external to the secure processing sub-system 300. Optionally, it may be external to the integrated circuit 200. For example, it may be a flash memory. It may be connected to the secure processing sub-system 300 either directly or via the integrated circuit 200. This external NVM 400 is used by the secure processing sub-system 300 to store data in a persistent manner, even in case of power interruption. The data may include any type of data such as information or code. The nature of the data may depend on the functionality of the system 100 and/or the applications, functions, operations executed by the system 100. As example, the data can include an operating system, JAVA-OS, SIM applications, operator profiles, network authentication keys, IoT applications, etc... These examples are only illustrative and non-limitative. In another embodiment, the non-volatile memory 400 could be implemented on the integrated circuit 200, preferably outside the secure processing sub-system 300.

Optionally, the system 100 may further comprise a volatile memory 500 used during the power cycles for the data updates, as described in more details later. The volatile memory 500 may be external to the integrated circuit 200. Alternatively, the volatile memory 500 could be implemented on the integrated circuit 200, preferably outside the secure processing sub-system 300.

Optionally, the system 100 may have an external memory 700 including one part or area of non-volatile memory, corresponding to the NVM 400, and one part or area of volatile memory, corresponding to the volatile memory 500.

As previously indicated, the external NVM 400 is used by the secure processing sub-system 300 to store data. The data, stored in the external NVM 400, may be updated over time in some power cycles. The updates of the data may be monitored using the volatile memory 500 and/or the volatile memory 307, while the system 100 is powered. However, the content of the volatile memories 500 and 307 is erased or lost, when the power supply to the system 100 is interrupted. In case of power interruption, to persist the updated data in memory (in other words for persistent storage of the updated data), one or more writing actions to the internal NVM 303 and, if needed, to the external NVM memory 400 are performed, before interrupting the power supply and erasing the volatile memories 500 and/or 307, as described later in more details.

In a first embodiment, the data that is stored in the external NVM 400 may be copied into the volatile memory 500 at the beginning of each power cycle, and then maintained and updated in the volatile memory 500 during the power cycle. At the end of the power cycle, shortly before the power interruption, the updated data is written from the volatile memory 500 to the external non-volatile memory 400. In some cases, it is not desired to persist in memory, or keep in a persistent memory, all the updated data, but only a part of the updated data. In such cases, only the updated data to persist in memory may be written from the volatile memory to the external non-volatile memory 400.

In a second embodiment, the data may be maintained and updated in the external NVM 400 during the power cycles. Indeed, it is possible to update the data in the external NVM 400.

The programming time in a non-volatile memory is higher than in a volatile memory. Furthermore, using the external NVM 400 to store all the updates of the data, including transient updates, leads to a faster wear of the non-volatile memory 400. So, it is more relevant technically to use the volatile memory to update the data during the power cycles, according to the first embodiment, so as to spare the external non-volatile memory and reduce programming time.

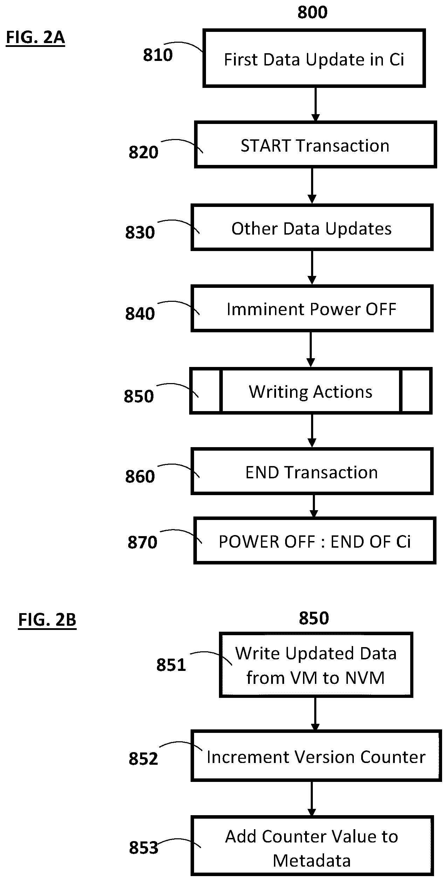

Figure 2A is a flowchart 800 of a data updating process, according to an embodiment, performed during a power cycle Ci.

Let's consider that, in the present embodiment, at the beginning of the power cycle Ci, the data initially stored in the non-volatile memory 400 is copied into the volatile memory 500. Then, during the power cycle Ci, the data is maintained and updated within the volatile memory 500. In other embodiments, the non-volatile memory 307 of the secure processing sub-system 300 may be used to store, maintain and update the data from the non-volatile memory, in addition to or instead of the volatile memory 500.

A first update of the data within the power cycle Ci, in a step 810, triggers the secure processing sub-system 300 to start a transaction processing. The transaction processing is started by writing to the internal NVM 303 a first transaction data, or start transaction data, marking the start of the transaction, in a step 820.

Then, during the power cycle Ci, the data may undergo one or more further updates, represented by a step 830. It should be noted that at least part of the updates may be transient updates. The data is updated within the volatile memory 500, in the step 830. The updates of the data in the volatile memory 500 may be done by the processor or CPU 201 of the integrated circuit 200. The secure processing sub-system 300 may prepare and secure the updated data in confidentiality, integrity, authenticity and freshness.

In a step 840, a power interruption is imminent. The secure processing sub-system 300 may be informed of this event by the integrated circuit 200. For example, the integrated circuit 200 may receive a signal from a battery controller indicating that a power loss from the battery 600 is imminent when the battery charge level is below a predefined threshold, and informs the secure processing sub-system 300.

The step 840 is a triggering event to perform a step 850 of executing different actions of writing to the internal non-volatile memory 303 and to the external non-volatile memory 400 so as to update them in accordance with the updated data that needs to persist in memory during the power interruption. The step 850 may be performed by the secure processing sub-system 300, and/or by the integrated circuit 200 under control of the secure processing sub-system 300. The writing actions to update the internal and external non-volatile memories 303, 400 are illustrated in figure 2B and explained below:
- the updated data that the secure processing sub-system 300 wants to persist in memory is written from the volatile memory 500 to the external non-volatile memory 400, in a step 851;
- a version counter 304 is incremented in the internal non-volatile memory 303, in a step 852;
- the incremented value of the version counter 304 is added to the updated data within the external NVM 400, in a step 853.

The version counter 304 has the function of counting the power cycles with update of the data in the external non-volatile memory 400. It means that:
- if during a power cycle, there is no update, or change, of the data stored in the external non-volatile memory 40, the version counter 304 is not incremented; and
- if the data is updated several times during one power cycle with update of the data stored in the external non-volatile memory 400, the version counter 304 is only incremented once.

Thus, in operation, the version counter 304 may be incremented once at the end of each power cycle with update of the data stored in the external NVM 400. The version counter 304 does not need to be incremented each time the data is updated. It is sufficient that the version counter 304 counts the power cycles with update of the data stored in the external NVM 400.

The updated data that is stored in the external non-volatile memory 400 in the step 851 corresponds to a certain version of the data. The value of the version counter 304 corresponds to a version value for the data version stored in the external NVM 400.

For security reasons, the data stored in the external NVM 400 may be cryptographically encrypted and authenticated. Furthermore, the data may be stored in the external NVM 400 in association with metadata containing information on the stored data. The metadata may be cryptographically encrypted and/or authenticated. The authentication mechanism used for the data may be a hash-based signature, a block cipher based message authentication or an asymmetric cryptography based signature. In that case, the message authentication code and/or the signature is included in the metadata. More generally, the metadata may include any type of authentication data (also referenced as an integrity figure), such as a signature, a hash, a hash MAC, a digital fingerprint, etc..., allowing to verify the integrity and/or authenticity of the data stored in the external non-volatile memory 400. The counter value, also referenced as the data version value, or stored in the internal NVM 303 may be included in the authentication process and may also be added in the metadata.

Any other type of version information representative of the version of the updated data stored in the external NVM 400 could be used. For example, the version information of the data stored in the external NVM 400 may include a condensed representation of the data stored in the external NVM, such as a hash value, a hash MAC, a digital fingerprint, etc... The condensed representation of data corresponds to an integrity figure representing the data. At the end of the power cycle with update of the data stored in the external NVM 400, the secure processing sub-system 300 may compute the condensed representation of the updated data stored in the external NVM 400, and store, or write, this condensed information into the internal NVM 303 and into the external NVM 400.

After completion of all the required writing actions 851, 852, 853 to update the internal and external non-volatile memories 303, 400 in the step 850, the transaction processing is closed, or committed, by writing a second transaction data, or end transaction data, marking the end of the transaction, in the internal NVM 303, in a step 860.

Finally, in a step 870, the power supply is interrupted, which marks the end of the power cycle Ci.

The steps 810 to 870 are executed for each power cycle where the data stored in the non-volatile memory 400 is updated.

There are different ways to write the first transaction data and the second transaction data marking the start and the end of a transaction processing, in the internal NVM 303, in the steps 820 and 860. The description below gives different examples of implementation. However, these examples are only illustrative and non-limitative.

In a first example of implementation, the secure processing sub-system 300:
. increments a value of a first transaction counter in the internal non-volatile memory 303 to write the first transaction data in the step 820;
. increments a value of a second transaction counter in the internal non-volatile memory 303 to write the second transaction data in the step 860.

In a second example of implementation, the secure processing sub-system 300:
. increments a value of a transaction counter in the internal non-volatile memory 303 to write the first transaction data in the step 820;
. increments a value of the same transaction counter in the internal non-volatile memory 303 to write the second transaction data in the step 860.

In a third example of implementation, the secure processing sub-system 300:
. extracts a transaction start value from a value table, pre-stored in the secure processing sub-system, containing preselected transaction start values associated with pre-selected transaction end values and write the extracted start value to the internal non-volatile memory to write the first transaction data, in the step 820;
. extracts the transaction end value associated with the extracted transaction start value from the value table and write the extracted transaction end value to the internal non-volatile memory to write the second transaction data, in the step 860.

The transaction processing is executed by the secure processing sub-system 300 during each power cycle where the data stored in the external non-volatile memory 400 is updated. It is started at a first update of the data and ended, or committed, after execution of required writing actions to update the internal non-volatile memory 303 and, if needed, the external non-volatile memory 400. The required writing actions may include writing updated data from the volatile memory 500 to the external non-volatile memory 400, writing a version information of the updated data stored in the volatile to the internal non-volatile memory 303, adding the same version information to the data stored in the external non-volatile memory 400, for example in metadata.

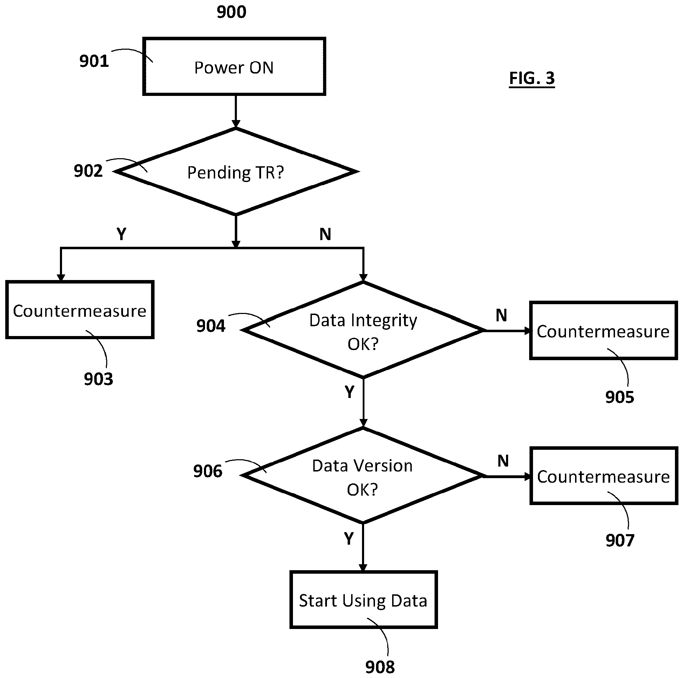

A process 900 of starting a power cycle according to an embodiment is illustrated in figure 3 and will now be described. This process may be executed each time the system 100 is power on, after a power interruption.

In figure 3, in a step 901, the system 100 is powered on by the power source 600, after a power interruption.

In a next step 902, the secure processing sub-system 300 verifies if a transaction is still pending in the internal non-volatile memory 303. A pending transaction is a transaction that has been started in a previous power cycle, but has not been closed or committed. In such a situation, the internal non-volatile memory 303 contains the first transaction data for the pending transaction, but fails to contain a second transaction data corresponding to, or consistent with, this first transaction data.

There are different ways to verify if a transaction is still pending in the internal non-volatile memory 303, depending on how the first transaction data and the second transaction data have been written into the internal NVM 303. Different examples of implementation for starting and ending a transaction processing have been previously described. It is described below how the secure processing sub-system 300 verifies if a transaction is still pending at the beginning of each power cycles, in these different examples of implementation.

In the first example of implementation with two transaction counters in the internal NVM 303, to verify if a transaction is still pending, the secure processing sub-system 300 compares the value of the first transaction counter and the value of the second transaction counter in the internal non-volatile memory 303 to check if a transaction executed during a previous power cycle is still pending. If the respective values of the two transaction counters are consistent with each other, typically identical, there is no pending transaction. In other words, the previous transaction has been committed. If the respective values of the two transaction counters are different, a transaction is still pending. In that case, the version of the data stored in the external non-volatile memory 400 is not trusted anymore and the data stored in the external non-volatile memory 400 will not be used. If there is no pending transaction, the secure processing sub-system 300 can use the data stored in the external non-volatile memory 400.

In the second example of implementation with one single transaction counter in the internal NVM 303, to verify if a transaction is still pending, the secure processing sub-system 300 verifies the even or odd character of the counter value to check if a transaction executed during a previous power cycle is still pending.

In the third example of implementation based on a value table, the secure processing sub-system 300 verifies that the transaction start value of the previous power cycle and the associated transaction end value are both written in the internal non-volatile memory 303 to check if a transaction executed during a previous power cycle is still pending.

If a transaction is still pending, the version of the data stored in the external non-volatile memory 400 is not trusted anymore by the secure processing sub-system 300, and the process goes to a countermeasure step 903 to prevent to use the data stored in the external non-volatile memory 400. In such a situation, the secure processing sub-system 300 considers that the data stored in the external non-volatile memory may have been replayed, due to a replay attack, or modified and cannot be trusted by the secure processing sub-system 300.

If there is no pending transaction in the step 902, the secure processing sub-system 300 can proceed with subsequent security checks related to the data stored in the external NVM 400.

Optionally, the secure processing sub-system 300 may verify the integrity and/or authenticity of the data stored in the external NVM 400, by verifying the signature or any other authentication and/or integrity element present in the metadata associated with the data, in a well-known manner, in a step 904.

If the integrity or authenticity check 904 fails, the process goes to a countermeasure step 905.

The secure processing sub-system 300 may also verify the version of the data stored in the external NVM 400, in a step 906, by checking if the version information stored in the internal non-volatile memory 303 matches the version of the data stored in the external non-volatile memory 400 in a step 908. For that purpose, the secure processing sub-system 300 may compare the version information present in the internal NVM 303 with the version information present in the external NVM 400 in association with the data stored therein, for example in the metadata associated with the stored data. As previously described, in an embodiment, the version information includes the value of a version counter 304 stored in the internal NVM 303. In another embodiment, the version information may include a condensed representation of the data stored in the external NVM 400. In any case, the version information present in the external NVM 400 should correspond to the version information stored in the internal NVM 303.

If the data version verification fails in the step 906, the process goes to a countermeasure step 907 to prevent to use the data stored in the external non-volatile memory 400. In such a situation, in other words in case the version information in the internal NVM 303 does not match the version of the data stored in the external NVM 400, the secure processing sub-system 300 considers that the data stored in the external non-volatile memory 400 may have been replayed, due to a replay attack.

If the data version of the data stored in the external NVM is successfully verified in the step 906, the secure processing sub-system 300 starts using the data stored in the external non-volatile memory 400. If the data is encrypted, the secure processing sub-system 300 decrypts the encrypted data. In an embodiment, the data stored in the external NVM 400 may also be copied into the volatile memory 500 to be used and updated by the secure processing sub-system 300 during the power cycle.

As previously explained, the process 900 of starting the power cycle may result in the execution of a countermeasure step in one of the following situations:
a) a transaction is still pending, step 903;
b) the integrity and/or authenticity of the data stored in the external NVM cannot be successfully verified, step 905;
c) the version of the data stored in the external NVM is wrong, as it does not correspond to the version information stored in the internal NVM, step 907.

In the countermeasure steps 903, 905, 907, the secure processing sub-system 300 executes a countermeasure to prevent the use of the data stored in the external NVM 400, because the data cannot be trusted. For example, a countermeasure may consist in erasing the untrusted data from the external NVM 400, or in simply prohibiting the use of the external NVM 400. This can lead to a non-functional system.

Alternatively, the external NVM 400 may have a first area and a second area, and only the first area is protected by the transaction-based anti-replay mechanism of the present disclosure. Thus, at the beginning of any power cycle, if it is detected in one of the steps 902, 904, 906, that the data stored in the first area cannot be trusted, the secure processing sub-system only prevents to use the data stored in the first area of the external non-volatile memory. For example, when the system 100 is powered on after a power interruption and a transaction is still pending, only the first area is invalidated and its content can no longer be used, while the second area remains valid and its content can still be used. The second area may be protected using another anti-replay mechanism. For example, the first area could be designed to store data which is updated very often (e.g., telco counters), and the second area could be designed to store data less often updated (e.g., firmware).

As previously indicated, in an embodiment, the data may be maintained and updated in the external NVM 400 during the power cycles, instead of being copied and updated in the volatile memory 500. In that case, optionally, at every update of the data in the external NVM 400, a data version information may be updated and written into a volatile memory, for example in the volatile memory 500 or in the volatile memory 307 of the secure processing sub-system 300, and stored in the external NVM 400 in association with the data stored therein, for example in the associated metadata, under control of the secure processing sub-system 300. Then, in case of an imminent power off, at the end of the power cycle, the secure processing sub-system 300 writes the current version information from the volatile memory 307 or 500 into the internal NVM 303.

The method of the present disclosure is a computer-implemented method.

The present disclosure also concerns
- a computer program comprising instructions which, when the program is executed by a computer, cause the computer to carry out the steps of the method previously described;
- a computer-readable medium having stored thereon the computer program.

## Claims

1. A method performed by a system (100) including
i) a secure processing sub-system (300) having an internal non-volatile memory (303),
ii) a non-volatile memory (400) that is external to the secure processing sub-system (300); wherein
during each power cycle where data stored in the external non-volatile memory is updated, the secure processing sub-system executes a transaction by performing the following steps :
. writing a first transaction data marking the start of the transaction in the internal non-volatile memory upon a first update of the data within the power cycle, and
. at the end of the power cycle, writing a second transaction data marking the end of said transaction to the internal non-volatile memory,
and, at the beginning of any power cycle, the secure processing sub-system (300) performs the steps of
. checking (902) if a transaction is still pending in the internal non-volatile memory (303) based on the transaction data written in the internal non-volatile memory (303); and
. if a transaction is still pending, preventing to use the data stored in the external non-volatile memory (400).

2. The method according to claim 1, wherein, at the end of each power cycle where the data stored in the external non-volatile memory is updated, the secure processing sub-system (300) writes into the internal non-volatile memory (303) a version information of the updated data stored in the external non-volatile memory before ending the transaction.

3. The method according to claim 2, wherein, at the beginning of any power cycle, after verifying that there is no pending transaction in the internal non-volatile memory (303), the secure processing sub-system (300) verifies (906) that the version of the data stored in the external non-volatile memory (400) matches the version information in the internal non-volatile memory (303) and, in a negative event, prevents (907) to use the data stored in the external non-volatile memory.

4. The method according to claim 2 or 3, wherein, at the end of the power cycle where the data stored in the external non-volatile memory (400) is updated, the secure processing sub-system (300) increments a version counter in the internal non-volatile memory (303) and writes the version counter value into the external non-volatile memory (400).

5. The method according to claim 2 or 3, wherein, at the end of the power cycle where the data stored in the external non-volatile memory (400) is updated, the secure processing sub-system (300) computes a condensed representation of the updated data stored in the external non-volatile memory and writes said condensed representation into the internal non-volatile memory (303) and into the external non-volatile memory (400).

6. The method according to any of claims 1 to 5, wherein the secure processing sub-system (300) controls to
. copy the data from the external non-volatile memory in a volatile memory (500), at the beginning of a power cycle,
. update the data in the volatile memory (500) during the power cycle, and
. at the end of the power cycle, write the updated data to persist in memory from said volatile memory to the external non-volatile memory before ending the transaction.

7. The method according to any of claims 1 to 5, wherein, in each power cycle where the data stored in the external non-volatile memory (400) is updated, the secure processing sub-system (300) controls to
. update the data in the external non-volatile memory (400) during the power cycle;
. at every update, write a data version information into a volatile memory (500, 307) and in the external non-volatile memory (400), and
. at the end of the power cycle, write the current data version information from the volatile memory (500, 307) to the internal non-volatile memory (303) before ending the transaction.

8. The method according to any of claims 1 to 7, wherein, the external non-volatile memory (400) has a first area and a second area, and, at the beginning of any power cycle, if a transaction is still pending, the secure processing sub-system (300) only prevents to use the data stored in the first area of the external non-volatile memory (400).

9. The method according to any of claims 1 to 8, wherein the secure processing sub-system:
. increments a value of a first counter in the internal non-volatile memory to write the first transaction data;
. increments a value of a second counter in the internal non-volatile memory to write the second transaction data,
and, at the beginning of any power cycle:
. compares the respective values of the first and second counters to check if a transaction executed during a previous power cycle is still pending.

10. The method according to any of claims 1 to 8, wherein the secure processing sub-system:
. increments a value of a counter in the internal non-volatile memory to write the first transaction data;
. increments a value of the same counter in the internal non-volatile memory to write the second transaction data;
and, at the beginning of any power cycle,
. verifies the even or odd character of said counter value to check if a transaction executed during a previous power cycle is still pending.

11. The method according to any of claims 1 to 8, wherein the secure processing sub-system:
. extracts a transaction start value from a value table, pre-stored in the secure processing sub-system, containing preselected transaction start values associated with pre-selected transaction end values and write the extracted start value to the internal non-volatile memory to write the first transaction data;
. extracts the transaction end value associated with the extracted transaction start value from the value table and write the extracted transaction end value to the internal non-volatile memory to write the second transaction data;
and, at the beginning of any power cycle:
. verifies that the transaction start value and the associated transaction end value are both written in the internal non-volatile memory to check if a transaction executed during a previous power cycle is still pending.

12. A system (100) including
i) a secure processing sub-system (300) having an internal non-volatile memory (303), and
ii) a non-volatile memory that is external to the secure processing sub-system (300);
wherein the system (100) has means to carry out the steps of the method according to any of claims 1 to 11.

13. A computer program comprising instructions which, when the program is executed by a computer, cause the computer to carry out the steps of the method according to any of claims 1 to 11.

## Patentansprüche

1. Verfahren, das von einem System (100) ausgeführt wird, das Folgendes umfasst
i) ein sicheres Verarbeitungsuntersystem (300) mit einem internen nichtflüchtigen Speicher (303),
ii) einen nichtflüchtigen Speicher (400), der sich außerhalb des sicheren Verarbeitungsuntersystems (300) befindet;
wobei während jedes Leistungszyklus, bei dem im externen nichtflüchtigen Speicher gespeicherte Daten aktualisiert werden, das sichere Verarbeitungsuntersystem durch Durchführen der folgenden Schritte eine Transaktion durchführt:
- Schreiben von ersten Transaktionsdaten, die den Anfang der Transaktion markieren, nach einer ersten Aktualisierung der Daten im Leistungszyklus in den internen nichtflüchtigen Speicher, und
- am Ende des Leistungszyklus Schreiben von zweiten Transaktionsdaten, die das Ende der Transaktion markieren, in den internen nichtflüchtigen Speicher,
und das sichere Verarbeitungsuntersystem (300) am Anfang von jedem Leistungszyklus die folgenden Schritte durchführt
- Prüfen (902) auf Basis der in den internen nichtflüchtigen Speicher (303) geschriebenen Transaktionsdaten, ob eine Transaktion im internen nichtflüchtigen Speicher (303) noch aussteht; und
- wenn eine Transaktion noch aussteht, Verhindern, dass die im externen nichtflüchtigen Speicher (400) gespeicherten Daten verwendet werden.

2. Verfahren nach Anspruch 1, wobei das sichere Verarbeitungsuntersystem (300) am Ende jedes Leistungszyklus, bei dem die im externen nichtflüchtigen Speicher gespeicherten Daten aktualisiert werden, Versionsinformationen über die im externen nichtflüchtigen Speicher gespeicherten aktualisierten Daten in den internen nichtflüchtigen Speicher (303) schreibt, bevor die Transaktion beendet wird.

3. Verfahren nach Anspruch 2, wobei das sichere Verarbeitungsuntersystem (300) am Anfang jedes Leistungszyklus, nachdem es verifiziert hat, dass im internen nichtflüchtigen Speicher (303) keine Transaktion aussteht, verifiziert (906), dass die Version der im externen nichtflüchtigen Speicher (400) gespeicherten Daten mit den Versionsinformationen im internen nichtflüchtigen Speicher (303) übereinstimmt, und in einem negativen Fall verhindert (907), dass die im externen nichtflüchtigen Speicher gespeicherten Daten verwendet werden.

4. Verfahren nach Anspruch 2 oder 3, wobei das sichere Verarbeitungsuntersystem (300) am Ende des Leistungszyklus, bei dem die im externen nichtflüchtigen Speicher (400) gespeicherten Daten aktualisiert werden, einen Versionszähler im internen nichtflüchtigen Speicher (303) inkrementiert und den Versionszählerwert in den externen nichtflüchtigen Speicher (400) schreibt.

5. Verfahren nach Anspruch 2 oder 3, wobei das sichere Verarbeitungsuntersystem (300) am Ende des Leistungszyklus, bei dem die im externen nichtflüchtigen Speicher (400) gespeicherten Daten aktualisiert werden, eine verdichtete Repräsentation der im externen nichtflüchtigen Speicher gespeicherten aktualisierten Daten berechnet und die verdichtete Repräsentation in den internen nichtflüchtigen Speicher (303) und in den externen nichtflüchtigen Speicher (400) schreibt.

6. Verfahren nach einem der Ansprüche 1 bis 5, wobei das sichere Verarbeitungsuntersystem (300) Folgendes steuert
- Kopieren der Daten aus dem externen nichtflüchtigen Speicher in einen flüchtigen Speicher (500) am Anfang eines Leistungszyklus,
- Aktualisieren der Daten im flüchtigen Speicher (500) während des Leistungszyklus, und
- am Ende des Leistungszyklus Schreiben der aktualisierten Daten zum Verbleiben im Speicher aus dem flüchtigen Speicher in den externen nichtflüchtigen Speicher, bevor die Transaktion beendet wird.

7. Verfahren nach einem der Ansprüche 1 bis 5, wobei das sichere Verarbeitungsuntersystem (300) bei jedem Leistungszyklus, bei dem die im externen nichtflüchtigen Speicher (400) gespeicherten Daten aktualisiert werden, Folgendes steuert
- Aktualisieren der Daten im externen nichtflüchtigen Speicher (400) während des Leistungszyklus;
- bei jeder Aktualisierung Schreiben von Datenversionsinformationen in einen flüchtigen Speicher (500, 307) und in den externen nichtflüchtigen Speicher (400), und
- am Ende des Leistungszyklus Schreiben der aktuellen Datenversionsinformationen aus dem flüchtigen Speicher (500, 307) in den internen nichtflüchtigen Speicher (303), bevor die Transaktion beendet wird.

8. Verfahren nach einem der Ansprüche 1 bis 7, wobei der externe nichtflüchtige Speicher (400) einen ersten Bereich und einen zweiten Bereich aufweist, und das sichere Verarbeitungsuntersystem (300) am Anfang jedes Leistungszyklus, wenn eine Transaktion noch aussteht, nur verhindert, dass die im ersten Bereich des externen nichtflüchtigen Speichers (400) gespeicherten Daten verwendet werden.

9. Verfahren nach einem der Ansprüche 1 bis 8, wobei das sichere Verarbeitungsuntersystem Folgendes durchführt:
- Inkrementieren eines Wertes eines ersten Zählers im internen nichtflüchtigen Speicher, um die ersten Transaktionsdaten zu schreiben;
- Inkrementieren eines Wertes eines zweiten Zählers im internen nichtflüchtigen Speicher, um die zweiten Transaktionsdaten zu schreiben,
und am Anfang von jedem Leistungszyklus:
- Vergleichen der jeweiligen Werte des ersten und des zweiten Zählers, um zu prüfen, ob eine während eines vorherigen Leistungszyklus ausgeführte Transaktion noch aussteht.

10. Verfahren nach einem der Ansprüche 1 bis 8, wobei das sichere Verarbeitungsuntersystem Folgendes durchführt:
- Inkrementieren eines Wertes eines Zählers im internen nichtflüchtigen Speicher, um die ersten Transaktionsdaten zu schreiben;
- Inkrementieren eines Wertes desselben Zählers im internen nichtflüchtigen Speicher, um die zweiten Transaktionsdaten zu schreiben;
und am Anfang von jedem Leistungszyklus,
- Verifizieren den geraden oder ungeraden Charakter des Zählerwertes, um zu prüfen, ob eine während eines vorherigen Leistungszyklus ausgeführte Transaktion noch aussteht.

11. Verfahren nach einem der Ansprüche 1 bis 8, wobei das sichere Verarbeitungsuntersystem Folgendes durchführt:
- Extrahieren eines Transaktionsanfangswertes aus einer Wertetabelle, die vorab im sicheren Verarbeitungsuntersystem gespeichert wurde und vorausgewählte Transaktionsanfangswerte enthält, die mit vorausgewählten Transaktionsendwerten verknüpft sind, und Schreiben des extrahierten Anfangswertes in den internen nichtflüchtigen Speicher, um die ersten Transaktionsdaten zu schreiben;
- Extrahieren des Transaktionsendwertes, der mit dem extrahierten Transaktionsanfangswert verknüpft ist, aus der Wertetabelle und Schreiben des extrahierten Transaktionsendwertes in den internen nichtflüchtigen Speicher, um die zweiten Transaktionsdaten zu schreiben;
und am Anfang von jedem Leistungszyklus:
- Verifizieren, dass der Transaktionsanfangswert und der verknüpfte Transaktionsendwert in den internen nichtflüchtigen Speicher geschrieben werden, um zu prüfen, ob eine während eines vorherigen Leistungszyklus ausgeführte Transaktion noch aussteht.

12. System (100), das Folgendes beinhaltet
i) ein sicheres Verarbeitungsuntersystem (300) mit einem internen nichtflüchtigen Speicher (303), und
ii) einen nichtflüchtigen Speicher, der sich außerhalb des sicheren Verarbeitungsuntersystems (300) befindet;
wobei das System (100) Mittel zum Umsetzen der Schritte des Verfahrens nach einem der Ansprüche 1 bis 11 aufweist.

13. Computerprogramm, das Anweisungen umfasst, die, wenn das Programm von einem Computer ausgeführt wird, den Computer veranlassen, die Schritte des Verfahrens nach einem der Ansprüche 1 bis 11 umzusetzen.

## Revendications

1. Procédé réalisé par un système (100) comportant
i) un sous-système de traitement sécurisé (300) ayant une mémoire interne non volatile (303),
ii) une mémoire non volatile (400) qui est externe au sous-système de traitement sécurisé (300) ;
dans lequel, lors de chaque cycle d'alimentation où des données stockées dans la mémoire non volatile externe sont mises à jour, le sous-système de traitement sécurisé exécute une transaction en réalisant les étapes suivantes :
- écrire des premières données de transaction marquant le début de la transaction dans la mémoire interne non volatile lors d'une première mise à jour des données au cours du cycle d'alimentation, et
- à la fin du cycle d'alimentation, écrire des deuxièmes données de transaction marquant la fin de ladite transaction dans la mémoire interne non volatile,
et au début de tout cycle d'alimentation, le sous-système de traitement sécurisé (300) réalise les étapes suivantes
- vérifier (902) si une transaction est toujours en attente dans la mémoire interne non volatile (303) sur la base des données de transaction écrites dans la mémoire interne non volatile (303) ; et
- si une transaction est toujours en attente, empêcher l'utilisation des données stockées dans la mémoire non volatile externe (400).

2. Procédé selon la revendication 1, dans lequel, à la fin de chaque cycle d'alimentation où les données stockées dans la mémoire non volatile externe sont mises à jour, le sous-système de traitement sécurisé (300) écrit dans la mémoire interne non volatile (303) des informations de version des données mises à jour stockées dans la mémoire non volatile externe avant de mettre fin à la transaction.

3. Procédé selon la revendication 2, dans lequel, au début de tout cycle d'alimentation, après avoir vérifié qu'il n'y a pas de transaction en attente dans la mémoire interne non volatile (303), le sous-système de traitement sécurisé (300) vérifie (906) que la version des données stockées dans la mémoire non volatile externe (400) concorde avec les informations de version dans la mémoire interne non volatile (303), et dans un événement négatif, empêche (907) l'utilisation des données stockées dans la mémoire non volatile externe.

4. Procédé selon la revendication 2 ou 3, dans lequel, à la fin du cycle d'alimentation où les données stockées dans la mémoire non volatile externe (400) sont mises à jour, le sous-système de traitement sécurisé (300) incrémente un compteur de versions dans la mémoire interne non volatile (303) et écrit la valeur du compteur de versions dans la mémoire non volatile externe (400).

5. Procédé selon la revendication 2 ou 3, dans lequel, à la fin du cycle d'alimentation où les données stockées dans la mémoire non volatile externe (400) sont mises à jour, le sous-système de traitement sécurisé (300) calcule une représentation condensée des données mises à jour stockées dans la mémoire non volatile externe, et écrit ladite représentation condensée dans la mémoire interne non volatile (303) et dans la mémoire non volatile externe (400).

6. Procédé selon l'une des revendications 1 à 5, dans lequel le sous-système de traitement sécurisé (300) commande
- la copie des données de la mémoire non volatile externe dans une mémoire volatile (500), au début d'un cycle d'alimentation,
- la mise à jour des données dans la mémoire volatile (500) au cours du cycle d'alimentation, et
- à la fin du cycle d'alimentation, l'écriture des données mises à jour à conserver en mémoire provenant de ladite mémoire volatile dans la mémoire non volatile externe avant de mettre fin à la transaction.

7. Procédé selon l'une des revendications 1 à 5, dans lequel, dans chaque cycle d'alimentation où les données stockées dans la mémoire non volatile externe (400) sont mises à jour, le sous-système de traitement sécurisé (300) commande
- la mise à jour des données dans la mémoire non volatile externe (400) au cours du cycle d'alimentation ;
- à chaque mise à jour, l'écriture d'informations de version de données dans une mémoire volatile (500, 307) et dans la mémoire non volatile externe (400), et
- à la fin du cycle d'alimentation, l'écriture des informations de version de données actuelles de la mémoire volatile (500, 307) dans la mémoire interne non volatile (303) avant de mettre fin à la transaction.

8. Procédé selon l'une des revendications 1 à 7, dans lequel, la mémoire non volatile externe (400) a une première zone et une deuxième zone, et au début de tout cycle d'alimentation, si une transaction est toujours en attente, le sous-système de traitement sécurisé (300) empêche uniquement l'utilisation des données stockées dans la première zone de la mémoire non volatile externe (400).

9. Procédé selon l'une des revendications 1 à 8, dans lequel le sous-système de traitement sécurisé :
- incrémente une valeur d'un premier compteur dans la mémoire interne non volatile pour écrire les premières données de transaction ;
- incrémente une valeur d'un deuxième compteur dans la mémoire interne non volatile pour écrire les deuxièmes données de transaction,
et au début de tout cycle d'alimentation :
- compare les valeurs respectives des premier et deuxième compteurs pour vérifier si une transaction exécutée au cours d'un cycle d'alimentation précédent est toujours en attente.

10. Procédé selon l'une des revendications 1 à 8, dans lequel le sous-système de traitement sécurisé :
- incrémente une valeur d'un compteur dans la mémoire interne non volatile pour écrire les premières données de transaction ;
- incrémente une valeur du même compteur dans la mémoire interne non volatile pour écrire les deuxièmes données de transaction ;
et au début de tout cycle d'alimentation,
- vérifie le caractère pair ou impair de ladite valeur de compteur pour vérifier si une transaction exécutée au cours d'un cycle d'alimentation précédent est toujours en attente.

11. Procédé selon l'une des revendications 1 à 8, dans lequel le sous-système de traitement sécurisé :
- extrait une valeur de début de transaction d'une table de valeurs préenregistrées dans le sous-système de traitement sécurisé contenant des valeurs de début de transaction présélectionnées associées à des valeurs de fin de transaction présélectionnées, et écrit la valeur de début extraite dans la mémoire interne non volatile pour écrire les premières données de transaction ;
- extrait la valeur de fin de transaction associée à la valeur de début de transaction extraite de la table de valeurs, et écrit la valeur de fin de transaction extraite dans la mémoire interne non volatile pour écrire les deuxièmes données de transaction ;
et au début de tout cycle d'alimentation :
- vérifie que la valeur de début de transaction et la valeur de fin de transaction associée sont toutes deux écrites dans la mémoire interne non volatile pour vérifier si une transaction exécutée au cours d'un cycle d'alimentation précédent est toujours en attente.

12. Système (100) comportant
i) un sous-système de traitement sécurisé (300) ayant une mémoire interne non volatile (303), et
ii) une mémoire non volatile qui est externe au sous-système de traitement sécurisé (300) ;
dans lequel le système (100) est doté de moyens pour mettre en œuvre les étapes du procédé selon l'une des revendications 1 à 11.

13. Programme informatique comprenant des instructions qui, lorsque le programme est exécuté par un ordinateur, amènent l'ordinateur à mettre en œuvre les étapes du procédé selon l'une des revendications 1 à 11.
